Europäisches Patentamt

European Patent Office

Office européen des brevets

(19)

(11) **EP 0 555 118 B1**

(12) **FASCICULE DE BREVET EUROPEEN**

(45) Date de publication et mention
de la délivrance du brevet:
**22.05.1996 Bulletin 1996/21**

(51) Int. Cl.⁶: **B60G 21/073**

(21) Numéro de dépôt: **93400168.6**

(22) Date de dépôt: **26.01.1993**

(54) **Dispositif anti-dévers pour un train de roues de véhicule automobile**

Antirollvorrichtung für eine Kraftfahrzeugradaufhängung

Anti-roll device for motor vehicle wheel suspension

(84) Etats contractants désignés:
**DE GB IT**

(30) Priorité: **04.02.1992 FR 9201226**

(43) Date de publication de la demande:
**11.08.1993 Bulletin 1993/32**

(73) Titulaires:
• **AUTOMOBILES PEUGEOT**
  **F-75116 Paris (FR)**
• **AUTOMOBILES CITROEN**
  **F-92200 Neuilly sur Seine (FR)**

(72) Inventeurs:
• **Clairenbeaud, Michel**
  **F-91120 Palaiseau (FR)**

• **Barthelemy, André**
  **F-78470 Saint Remy les Chevreuse (FR)**

(74) Mandataire: **Robert, Jean-François et al**
**PSA PEUGEOT CITROEN,**
**Propriété Industrielle,**
**18, rue des Fauvelles**
**F-92250 La Garenne Colombes (FR)**

(56) Documents cités:
EP-A- 0 354 113                CH-A- 193 811
DE-B- 1 241 717               FR-A- 1 271 895
FR-A- 2 263 118               FR-A- 2 300 689
FR-A- 2 623 754               US-A- 3 197 233
US-A- 3 490 786

EP 0 555 118 B1

Printed by Rank Xerox (UK) Business Services
2.11.7/3.4

**Description**

La présente invention concerne un dispositif anti-dévers pour un train de roues de véhicule automobile.

On connait de tels dispositifs permettant de corriger le dévers ou assiette transversale d'un véhicule automobile en agissant sur les éléments d'une barre de stabilisation ou anti-dévers entraînés en rotation l'un par rapport à l'autre. Un moteur de réglage constitué par un vérin rotatif ou linéaire est monté entre les deux éléments de la barre anti-dévers de manière à exercer sur celle-ci des efforts de torsion corrigeant l'assiette du véhicule. Un dispositif tel que défini dans le préambule de la revendication 1 est connu du FR-A-1271895

Cependant, ce dispositif anti-dévers connu est difficile à mettre en oeuvre en pratique à cause des problèmes d'étanchéité propres au vérin rotatif.

La présente invention a pour but d'éliminer l'inconvénient ci-dessus en proposant un dispositif anti-dévers pour un train de roues de véhicule automobile, du type comprenant une barre anti-dévers réalisée en deux parties dont chacune est liée à l'élément de suspension de l'une des roues et des moyens sensibles au dévers du véhicule agissant sur les deux parties de la barre anti-dévers pour corriger le dévers du véhicule, ces moyens comprenant au moins un vérin du type linéaire L'invention résout le probleme ci-dessus grâce aux dispositions énoncées dans la partie caracterisante de la revendication 1.

Selon une caractéristique de l'invention, chaque vérin linéaire précité est relié aux deux leviers par des articulations.

Chaque vérin linéaire précité est du type hydraulique, pneumatique ou électrique.

Les deux leviers précités sont sensiblement en forme de S et de sens opposés vus dans un plan perpendiculaire à l'axe de rotation de la barre anti-dévers.

Les deux vérins sont agencés de manière à s'allonger ou se rétracter simultanénement.

Le dispositif anti-dévers de l'invention comprend un circuit hydraulique d'alimentation de chaque vérin hydraulique du type différentiel comprenant une pompe haute pression alimentant en fluide hydraulique à pression constante l'une des chambres de chaque vérin hydraulique et un moyen correcteur hydraulique, constitué de préférence par un tiroir hydraulique, relié à un détecteur de dévers et à la pompe haute pression pour alimenter en fluide hydraulique à pression régulée l'autre chambre du vérin hydraulique de façon que lorsque le détecteur detecte un dévers, la pression de fluide dans l'autre chambre augmente ou diminue suivant la valeur de l'angle du dévers pour que les vérins exercent sur les deux parties de la barre anti-dévers, par l'intermédiaire des deux leviers, un couple de torsion corrigeant le dévers du véhicule.

La barre anti-dévers se présente sous la forme de deux demi-barres de même longueur ou de longueurs différentes.

Selon une variante de réalisation, la barre anti-dévers se présente sous la forme d'une barre unique dont une extrémité est solidaire de l'élément de suspension de l'une des roues et l'autre extrémité solidaire de l'un des deux leviers, l'autre levier étant solidaire de l'élément de suspension de l'autre roue formant la deuxième partie de la barre anti-dévers.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

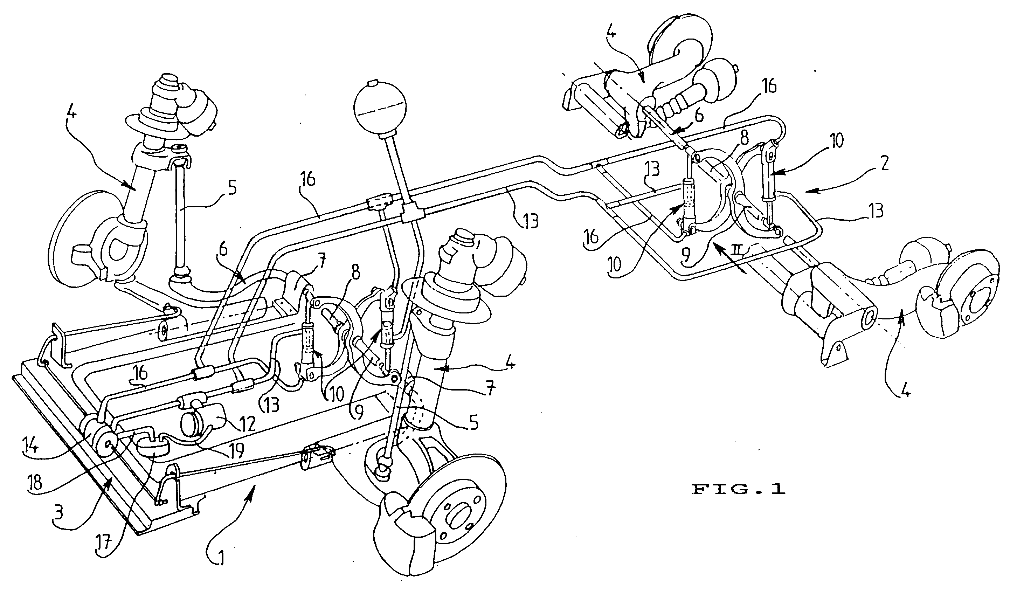

- la figure 1 est une vue schématique et en perspective des trains avant et arrière d'un véhicule automobile équipé du dispositif anti-dévers conforme à l'invention ;

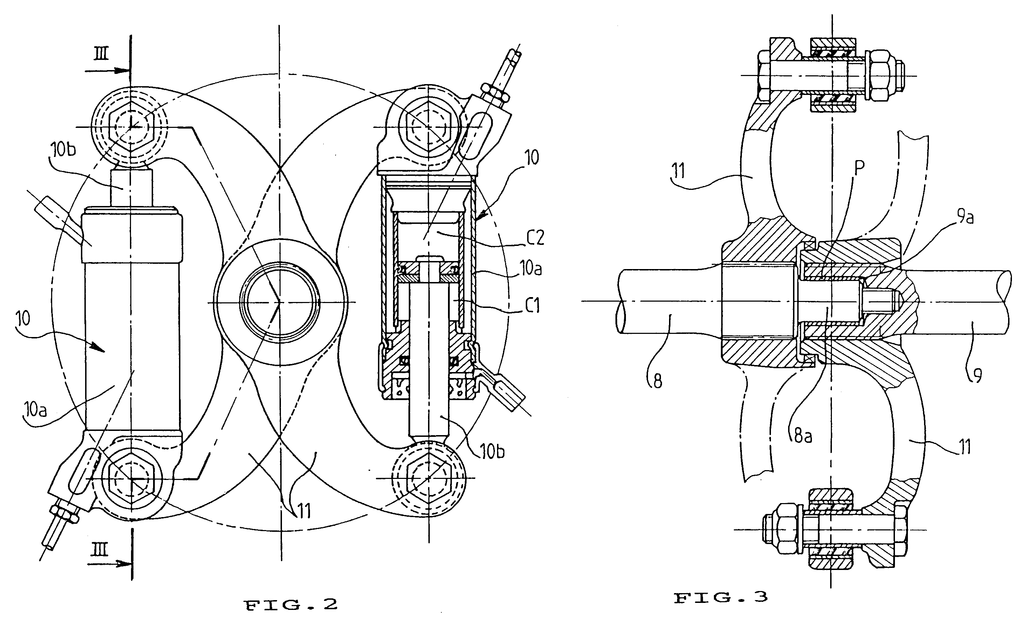

- la figure 2 est une vue suivant la flèche II de la figure 1 ;
- la figure 3 est une vue en coupe suivant la ligne III-III de la figure 2 ; et

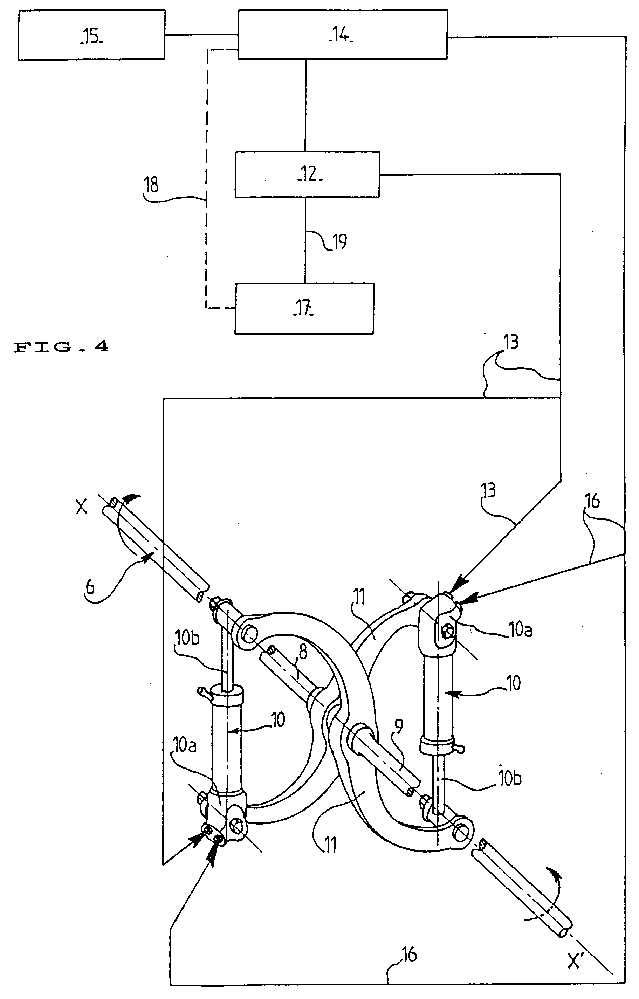

- la figure 4 illustre schématiquement le circuit hydraulique d'alimentation des vérins utilisés dans le dispositif anti-dévers de l'invention.

En se reportant aux figures, la référence 1 désigne un train avant d'un véhicule automobile dont le train arrière porte la référence 2, chaque train étant équipé de deux roues droite et gauche liées à la caisse du véhicule repérée d'une manière générale en 3. Les roues sont reliées à la caisse 3 notamment par des éléments de suspension 4 solidaires des roues.

Le train avant 1 comprend deux tiges rigides 5 articulées chacune à leur extrémité supérieure à un élément de suspension 4 et à leur extrémité inférieure à une extrémité d'une barre anti-dévers ou de stabilisation 6 agencée transversalement à la direction longitudinale du véhicule et montée rotative dans des paliers 7 solidaires de la caisse 3 du véhicule.

Le train arrière 2 comprend une barre anti-dévers portant également la référence 6 agencée transversalement à la direction longitudinale du véhicule et ayant ses extrémités reliées aux éléments de suspension 4 des roues arrière.

Des moyens sensibles au dévers du véhicule sont introduits entre les deux éléments ou parties 8,9 d'une barre anti-dévers 6 de manière à agir sur les deux parties 8,9 pour corriger le dévers du véhicule.

Selon l'invention, ces moyens comprennent au moins un vérin 10 du type linéaire dont le corps 10a est relié de façon articulée à l'extrémité d'un premier levier 11 solidaire en rotation de l'un 8,9 des deux éléments de la barre anti-dévers 6 et la tige 10b est reliée également de façon articulée à l'extrémité d'un second levier 11 solidaire en rotation de l'autre élément 9,8 de la barre anti-dévers 6.

Les deux éléments 8,9 de la barre anti-dévers 6 tourillonnent l'un par rapport à l'autre au moyen d'un palier P et sont de même longueur ou de longueurs différentes. Plus précisément, l'un des éléments, par exemple l'élément 8 de la barre anti-dévers 6, comporte un embout cylindrique 8a usiné à l'extrémité de l'élément 8 pouvant tourillonner dans un trou borgne 9a, par l'intermédiaire du palier P, percé dans l'autre élément 9 de la barre 6 de telle manière que les deux éléments 8,9 soient coaxiaux.

De préférence, les moyens sensibles au dévers du véhicule comprennent deux vérins 10 agissant chacun sur les deux leviers 11. Comme représenté, le second vérin 10 a son corps 10a relié de façon articulée à l'extrémité du premier levier 11 opposée à celle reliée au corps 10a de l'autre vérin 10 et sa tige 10b reliée de façon articulée à l'extrémité du second levier opposée à celle reliée à la tige 10b de l'autre vérin 10. Cette disposition n'est pas obligatoire et les deux vérins 10 peuvent ainsi agir sur les deux leviers 11 de telle façon que leurs tiges respectives 10b se déplacent dans le même sens. L'essentiel est que les deux vérins 10 soient commandés de façon que leurs tiges 10b s'allongent ou se rétractent simultanément. Il est préférable d'utiliser deux vérins 10 plutôt qu'un seul afin que les efforts exercés sur le palier P s'annulent.

Les deux leviers 11 sont disposés symétriquement l'un de l'autre par rapport à un plan contenant l'axe de rotation X-X' de la barre anti-dévers 6 et sont sensiblement en forme de S et de sens opposés lorsque vus dans un plan perpendiculaire à l'axe de rotation X-X'.

Les deux vérins linéaires 10 peuvent être des vérins du type hydraulique, pneumatique ou électrique.

Dans le cas où les deux vérins 10 sont hydrauliques et du type différentiel, le circuit hydraulique d'alimentation de chaque vérin 10 comprend une pompe haute pression 12 alimentant en fluide hydraulique à pression constante, par l'intermédiaire de conduites flexibles 13, l'une C1 des chambres de chaque vérin hydraulique et un moyen correcteur hydraulique 14, de préférence constitué par un tiroir hydraulique, relié à un détecteur de dévers 15 et à la pompe 12 pour alimenter en fluide hydraulique, au travers de conduites flexibles 16, l'autre chambre C2 du vérin hydraulique 10. La référence 17 désigne un réservoir relié à la pompe 12 et au moyen correcteur 14 par des conduites 18 et 19.

Le fonctionnement du dispositif qui vient d'être décrit est le suivant.

Une pression hydraulique constante P1 est appliquée par la pompe 12 dans les chambres C1 de surface active S1. Le moyen correcteur 14 applique une pression hydraulique régulée P2 dans les chambres C2 de surface active S2 de façon à obtenir un équilibre où $S1 \times P1 = S2 \times P2$ avec $S1/S2 = 0,5$, par exemple. Dans cette position d'équilibre, les pistons associés aux tiges 10b des vérins 10 sont sensiblement au milieu de leur course totale, l'ensemble est bloqué et se comporte comme une barre anti-dévers classique.

Lorsque le détecteur 15 détecte un dévers du véhicule, la pression P2 dans la chambre C2 augmente ou diminue suivant le sens et la grandeur de l'angle de dévers, ce qui a pour effet de sortir ou de rentrer les tiges 10b des vérins 10. Ceux-ci agissent simultanément sur les deux leviers 11 de manière à exercer sur les deux éléments 8, 9 de chaque barre anti-dévers 6 un couple de torsion entraînant ainsi en rotation l'un par rapport à l'autre ces deux éléments pour corriger le dévers du véhicule. Lorsque l'assiette du véhicule est rétablie, la pression P2 retrouve sa valeur d'équilibre ainsi que l'ensemble du dispositif.

Diverses modifications peuvent être apportées au dispositif anti-dévers décrit ci-dessus sans sortir du cadre de la présente invention. Ainsi, la barre anti-dévers 6 peut se présenter sous la forme d'une barre unique dont une extrémité est solidaire de l'élément de suspension 4 de l'une des roues et l'autre extrémité solidaire de l'un des deux leviers 11, l'autre levier 11 étant solidaire de l'élément de suspension 4 de l'autre roue formant alors la deuxième partie de la barre anti-dévers 6.

## Revendications

1. Dispositif anti-dévers pour un train de roues de véhicule automobile, du type comprenant une barre anti-dévers (6) réalisée en deux parties (8,9) dont chacune est liée à l'élément (4) de suspension de l'une des roues et des moyens (10) sensibles au dévers du véhicule agissant sur les deux parties (8,9) de la barre anti-dévers (6) pour corriger le dévers du véhicule, ces moyens (10) comprenant au moins un vérin du type linéaire, le dispositif étant caractérisé en ce que lesdits moyens (10) comprennent deux vérins (10) du type linéaire, chacun agissant sur deux leviers (11) et ayant son corps (10a) relié à l'un des leviers (11) solidaire en rotation de l'une (8,9) des deux parties de la barre anti-dévers (6) et sa tige (10b) reliée à l'autre levier (11) solidaire en rotation de l'autre partie (9,8) de la barre anti-dévers (6), les deux leviers (11) précités étant symétriques l'un de l'autre par rapport à un plan contenant l'axe de rotation (X-X') de la barre anti-dévers (6) et les deux parties (8,9) de celle-ci tourillonnant l'une par rapport à l'autre au moyen d'un palier (P).

2. Dispositif selon la revendication 1, caractérisé en ce que chaque vérin (10) précité est relié aux deux leviers (11) par des articulations.

3. Dispositif selon l'une des revendications précédentes, caractérisé en ce que chacun des vérins (10) est du type hydraulique, pneumatique ou électrique.

4. Dispositif selon l'une des revendications précédentes, caractérisé en ce que les deux leviers (11) précités sont sensiblement en forme de (S) et de sens opposés vus dans un plan perpendiculaire à l'axe de rotation (X-X') de la barre anti-dévers (6).

**5.** Dispositif selon l'une quelconque des revendications précédentes, caractérisé en ce que les deux vérins (10) sont agencés de manière à s'allonger ou se rétracter simultanément.

**6.** Dispositif selon l'une des revendications précédentes, caractérisé en ce qu'il comprend un circuit hydraulique d'alimentation de chaque vérin hydraulique (10) du type différentiel comprenant une pompe haute pression (12) alimentant en fluide hydraulique à pression constante l'une (C1) des chambres de chaque vérin hydraulique (10) et un moyen correcteur hydraulique (14), constitué de préférence par un tiroir hydraulique, relié à un détecteur de dévers (15) et à la pompe haute pression (12) pour alimenter en fluide hydraulique à pression régulée l'autre chambre (C2) du vérin hydraulique (10) de façon que lorsque le détecteur (15) détecte un dévers, la pression de fluide dans l'autre chambre (C2) augmente ou diminue suivant la valeur de l'angle du dévers pour que les vérins (10) exercent sur les deux parties (8,9) de la barre anti-dévers (6), par l'intermédiaire des deux leviers (11), un couple de torsion destiné à corriger le dévers du véhicule.

**7.** Dispositif selon l'une des revendications précédentes, caractérisé en ce que la barre anti-dévers (6) se présente sous la forme de deux demi-barres (8,9) de même longueur ou de longueurs différentes.

**8.** Dispositif selon l'une des revendications 1 à 6, caractérisé en ce que la barre anti-dévers (6) se présente sous la forme d'une barre unique dont une extrémité est solidaire de l'élément de suspension (4) de l'une des roues et l'autre extrémité solidaire de l'un des deux leviers (11), l'autre levier (11) étant solidaire de l'élément de suspension (4) de l'autre roue formant la deuxième partie de la barre anti-dévers (6).

**Claims**

**1.** An anti-roll device for a wheel and axle set of a motor vehicle, of the type comprising an anti-roll bar (6) made in two portions (8, 9), each of which is linked to the suspension element (4) of one of the wheels, and means (10) sensitive to the rolling of the vehicle, acting on both portions (8, 9) of the anti-roll bar (6) to correct the rolling of the vehicle, these means (10) comprising at least one linear-type actuator, the device being characterised in that said means (10) comprise two linear-type actuators (10), each acting on two levers (11) and having its body (10a) connected to one of the levers (11), which is fixed in rotation to one (8, 9) of the two portions of the anti-roll bar (6), and its shaft (10b) connected to the other lever (11), which is fixed in rotation to the other portion (9, 8) of the anti-roll bar (6), the two aforementioned levers (11) being symmetrical to one another about a plane containing the axis of rotation (X-X') of the anti-roll bar (6) and the two portions (8, 9) of the latter pivoting in respect of each other by means of a bearing (P).

**2.** A device according to Claim 1, characterised in that each aforementioned actuator (10) is connected to the two levers (11) by articulations.

**3.** A device according to one of the preceding claims, characterised in that each of the actuators (10) is of the hydraulic, pneumatic or electric type.

**4.** A device according to one of the preceding claims, characterised in that the two aforementioned levers (11) are substantially (S)-shaped and of opposite sense when viewed in a plane perpendicular to the axis of rotation (X-X') of the anti-roll bar (6).

**5.** A device according to any one of the preceding claims, characterised in that the two actuators (10) are arranged so as to extend or retract simultaneously.

**6.** A device according to one of the preceding claims, characterised in that it comprises a hydraulic circuit for supplying each hydraulic actuator (10) of the differential type comprising a high-pressure pump (12) supplying hydraulic fluid at a constant pressure to one (Cl) of the chambers of each hydraulic actuator (10) and a hydraulic correcting means (14), preferably constituted by a hydraulic slide valve, connected to a roll detector (15) and to the high-pressure pump (12) in order to supply hydraulic fluid at a regulated pressure to the other chamber (C2) of the hydraulic actuator (10) so that, when the detector (15) detects rolling, the fluid pressure in the other chamber (C2) increases or decreases according to the value of the angle of the roll so that the actuators (10) exercise a twisting moment on both portions (8, 9) of the anti-roll bar (6) through the intermediary of the two levers (11), said twisting moment being intended to correct the rolling of the vehicle.

**7.** A device according to one of the preceding claims, characterised in that the anti-roll bar (6) takes the form of two half-bars (8, 9) of the same length or of different lengths.

**8.** A device according to one of Claims 1 to 6, characterised in that the anti-roll bar (6) takes the form of a single bar, one end of which is rigid with the suspension element (4) of one of the wheels and the other end of which is rigid with one of the two levers (11), the other lever (11) being rigid with the suspension element (4) of the other wheel forming the second portion of the anti-roll bar (6).

## Patentansprüche

1. Anti-Schrägneigungsvorrichtung für einen Kraftfahrzeug-Radsatz, die der Art nach eine Anti-Schrägneigungs-Stange (6), die aus zwei Teilen (8, 9) gebildet ist, von denen jeder mit dem Aufhängungselement (4) eines der Räder verbunden ist, sowie Mittel (10) aufweist, die auf die Schrägneigung des Fahrzeugs ansprechen und auf die beiden Teile (8, 9) der Anti-Schrägneigungs-Stange (6) einwirken, um die Schrägneigung des Fahrzeugs zu korrigieren, wobei diese Mittel (10) mindestens einen der Art nach geradlinig wirkenden Stellantrieb bzw. Zylinder (10) aufweisen, und wobei die Vorrichtung dadurch gekennzeichnet ist, daß die genannten Mittel zwei der Art nach geradlinig wirkende Stellantriebe aufweisen, von denen jeder auf zwei Hebel (11) einwirkt und an seinem Körper (10a) mit dem einen Hebel (11) verbunden ist, der drehfest mit einem (8, 9) der beiden Teile der Anti-Schrägneigungs-Stange (6) verbunden ist, und an seinem Schaft (10b) mit dem anderen Hebel (11) verbunden ist, der drehfest mit dem anderen Teil (9, 8) der Anti-Schrägneigungs-Stange (6) verbunden ist, wobei die beiden, obengenannten Hebel (11) bezüglich einer Ebene zueinander symmetrisch sind, die die Drehachse (X-X') der Anti-Schrägneigungs-Stange enthält, und wobei deren beide Teile (8, 9) zueinander mittels eines Lagers (P) verdrehbar sind.

2. Vorrichtung nach Anspruch 1, dadurch gekennzeichnet, daß jeder obengenannte Stellantrieb (10) mit den beiden Hebeln (11) durch Gelenkverbindungen verbunden ist.

3. Vorrichtung nach einem der vorangehenden Ansprüche, dadurch gekennzeichnet, daß jeder der Stellantriebe (10) hydraulischer, pneumatischer oder elektrischer Art ist.

4. Vorrichtung nach einem der vorangehenden Ansprüche, dadurch gekennzeichnet, daß die beiden, obengenannten Hebel (11) im wesentlichen S-förmig und entgegengesetzt orientiert sind, gesehen in einer Ebene senkrecht zur Drehachse (X-X') der Anti-Schrägneigungs-Stange (6).

5. Vorrichtung nach einem der vorangehenden Ansprüche, dadurch gekennzeichnet, daß die beiden Stellantriebe (10) derart betrieben sind, daß sie gleichzeitig aus- oder einfahren.

6. Vorrichtung nach einem der vorangehenden Ansprüche, dadurch gekennzeichnet, daß sie einen hydraulischen Einspeisungskreis für jeden hydraulischen Stellantrieb aufweist, der der Art nach ein Differenzantrieb bzw. -zylinder (10) ist, mit einer Hochdruckpumpe (12), die die eine (C1) der Kammern eines jeden hydraulischen Stellantriebs (10) mit hydraulischem Strömungsmittel unter konstantem Druck speist, sowie mit hydraulischen Korrekturmitteln (14), die bevorzugt durch einen hydraulischen Steuerschieber gebildet sind, der mit einem Schrägneigungs-Fühler (15) und der Hochdruckpumpe (12) verbunden ist, um die andere Kammer (C2) des hydraulischen Stellantriebs (10) mit hydraulischem Strömungsmittel unter reguliertem Druck derart zu speisen, daß, wenn der Fühler (15) eine Schrägneigung erfaßt, der Druck des Strömungsmittels in der anderen Kammer (C2) entsprechend dem Wert des Winkels der Schrägneigung zu- oder abnimmt, damit die Stellantriebe (10) auf die beiden Teile (8, 9) der Anti-Schrägneigungs-Stange (6) mittels der beiden Hebel (11) ein Drehmoment aufbringen, das dazu bestimmt ist, die Schrägneigung des Fahrzeugs zu korrigieren.

7. Vorrichtung nach einem der vorangehenden Ansprüche, dadurch gekennzeichnet, daß sich die Anti-Schrägneigungs-Stange (6) in Form zweier Halbstangen (8, 9) mit gleicher Länge oder unterschiedlichen Längen darbietet.

8. Vorrichtung nach einem der Ansprüche 1 bis 6, dadurch gekennzeichnet, daß Anti-Schrägneigungs-Stange (6) sich in Form einer einzigen Stange darbietet, deren eines Ende mit dem Aufhängungselement (4) eines der Räder fest verbunden ist und deren anderes Ende fest mit einem der beiden Hebel (11) verbunden ist, während der andere Hebel (11) unter Bildung des zweiten Teils der Anti-Schrägneigungs-Stange (6) fest mit dem Aufhängungselement (4) des anderen Rades ver-bunden ist.

FIG. 1

FIG.2

FIG.3

EP 0 555 118 B1

FIG.4